(19) Europäisches Patentamt
European Patent Office
Office européen des brevets

(11) **EP 1 220 386 B1**

(12) **FASCICULE DE BREVET EUROPEEN**

(45) Date de publication et mention
de la délivrance du brevet:
**09.06.2004 Bulletin 2004/24**

(51) Int Cl.⁷: **H01S 3/0941**, H01S 3/06

(21) Numéro de dépôt: **01403047.2**

(22) Date de dépôt: **28.11.2001**

(54) **Source laser**

Laserquelle

Laser source

(84) Etats contractants désignés:
**DE GB SE**

(30) Priorité: **26.12.2000 FR 0017020**

(43) Date de publication de la demande:
**03.07.2002 Bulletin 2002/27**

(73) Titulaire: **COMPAGNIE INDUSTRIELLE DES LASERS CILAS
F-91460 Marcoussis (FR)**

(72) Inventeur: **Montagne, Jean-Eucher
45000 Orléans (FR)**

(74) Mandataire: **Hauer, Bernard
Cabinet Bonnétat
29, Rue de Saint-Pétersbourg
75008 Paris (FR)**

(56) Documents cités:
**EP-A- 0 404 635**     **EP-A- 1 115 186**

- **PATENT ABSTRACTS OF JAPAN vol. 018, no. 035 (E-1494), 19 janvier 1994 (1994-01-19) & JP 05 267750 A (MITSUBISHI ELECTRIC CORP), 15 octobre 1993 (1993-10-15)**
- **HONEA E C ET AL: "183-W, M2 = 2.4 YB:YAG Q-SWITCHED LASER" OPTICS LETTERS, OPTICAL SOCIETY OF AMERICA, WASHINGTON, US, vol. 24, no. 3, 1 février 1999 (1999-02-01), pages 154-156, XP000803123 ISSN: 0146-9592**
- **PATENT ABSTRACTS OF JAPAN vol. 017, no. 378 (E-1398), 15 juillet 1993 (1993-07-15) & JP 05 063263 A (HOYA CORP), 12 mars 1993 (1993-03-12)**

## Description

La présente invention concerne une source laser.

On sait qu'une source laser comporte, de façon générale, au moins :

- un élément actif comprenant au moins un barreau dopé, dans lequel est engendré un phénomène d'amplification (laser) stimulé ;
- un système de pompage engendrant au moins un faisceau de pompage qui est émis dans ledit élément actif de manière à apporter l'énergie nécessaire à ladite amplification laser ; et
- une cavité optique qui confère au faisceau laser obtenu par cette amplification laser, ses caractéristiques de directivité et de géométrie.

On sait que, pour obtenir un pompage satisfaisant, il est nécessaire que ce dernier présente un rendement et une homogénéité (sur le barreau dopé de l'élément actif) qui sont élevés, en particulier dans le cas d'un laser à trois niveaux.

En ce qui concerne le montage du système de pompage, on connaît un premier type de pompage dit pompage transverse, qui consiste à placer ledit système de pompage, généralement une diode laser, orthogonalement au barreau à pomper. Dans ce cas, tant que le barreau n'est pas trop long, on peut obtenir une bonne homogénéité suivant l'axe longitudinal de ce dernier. Toutefois, le rendement est souvent faible. En outre, lorsque le barreau est plus long que le système de pompage, il est nécessaire de prévoir un système optique pour homogénéiser le pompage. Un tel système optique est généralement très encombrant. De plus, le rendement reste malgré tout faible.

Pour augmenter le rendement, on peut utiliser un second type de pompage dit pompage longitudinal, qui consiste à placer le système de pompage dans l'axe du barreau laser. Alors que, dans ce cas, le rendement peut devenir très élevé, l'homogénéité est réduite. Il est en effet difficile de pomper l'extrémité du barreau, éloignée du système de pompage.

En outre, pour rendre le diagramme de l'énergie de pompage symétrique, on injecte généralement les faisceaux de pompage émis par des diodes laser dans une fibre optique. En sortie de fibre, les profils en champs proche et lointain sont circulaires, ce qui favorise le pompage. Toutefois, les diodes fibrées de ce type sont très coûteuses. De plus, le dépôt énergétique obtenu présente une forte décroissance entre la face d'entrée des faisceaux de pompage dans le barreau et la face de sortie, ce qui réduit le rendement.

La présente invention concerne une source laser qui permet de remédier à ces inconvénients, c'est-à-dire dont le pompage présente à la fois un rendement et une homogénéité élevés.

Par le document EP-0 404 635, on connaît une structure d'illumination d'un barreau laser, à sources optiques délocalisées, permettant d'obtenir une bonne évacuation de l'énergie thermique engendrée par les sources optiques de pompage, tout en obtenant une homogénéité de pompage satisfaisante. Pour ce faire, les sources optiques sont disposées sur un même support délocalisé muni d'un radiateur de chaleur et la structure d'illumination comporte une optique de transfert pour transférer le faisceau de pompage vers le barreau. Cette optique de transfert est constituée par des moyens réfléchissants qui renvoient le faisceau de pompage vers le barreau.

Toutefois, cette structure d'illumination connue est relativement encombrante et le rendement n'est pas optimal.

La présente invention a pour objet de remédier à ces inconvénients. Elle concerne une source laser peu encombrante, dont le pompage présente notamment une homogénéité et un rendement élevés.

A cet effet, selon l'invention, ladite source laser du type comportant au moins :

- un système de pompage pour engendrer au moins un faisceau de pompage ; et
- un élément actif qui comprend un barreau allongé pourvu d'une matrice dopée susceptible d'absorber des rayons de pompage dudit faisceau de pompage pour amplifier un rayonnement laser et au moins un bloc optique agencé d'un côté dudit barreau pour guider les rayons de pompage vers ledit barreau,

est remarquable en ce que ledit système de pompage est formé de manière à engendrer une pluralité de rayons de pompage qui sont parallèles entre eux et répartis transversalement audit élément actif, en regard au moins d'une face d'entrée dudit bloc optique, en ce que ladite face d'entrée du bloc optique est, au moins partiellement, inclinée par rapport à l'axe longitudinal dudit barreau et est, au moins partiellement, non orthogonale aux rayons de pompage engendrés par le système de pompage pour dévier par réfraction lesdits rayons de pompage de manière à les transmettre vers ledit barreau, et en ce que l'inclinaison de ladite face d'entrée est telle qu'elle dévie les rayons de pompage de sorte que ces derniers atteignent ledit barreau en étant répartis sur toute sa longueur.

Ainsi, grâce à l'invention, les rayons de pompage sont uniformément répartis sur toute la longueur du barreau de sorte que le pompage est particulièrement homogène.

De plus, la déviation des rayons de pompage est réalisée par simple réfraction. Par conséquent, il n'est pas nécessaire, pour réaliser cette déviation, de prévoir des moyens spécifiques, tels que des moyens de réflexion par exemple, qui sont parfois encombrants et qui nécessitent des traitements supplémentaires, souvent coûteux et longs à mettre en oeuvre.

On notera, en outre, que l'entrée conforme à l'invention des rayons de pompage dans le bloc optique est différente de la pratique usuelle, selon laquelle les rayons de pompage sont émis orthogonalement à la face d'entrée du bloc optique.

De préférence, ledit élément actif comporte deux blocs optiques qui sont agencés de part et d'autre dudit barreau et sont munis, chacun, d'une face d'entrée inclinée de sorte que le pompage du barreau est réalisé des deux côtés. De plus, ce pompage est réalisé de manière identique des deux côtés, si l'élément actif et le système de pompage sont symétriques par rapport à l'axe longitudinal dudit barreau.

Ainsi, grâce à ces caractéristiques supplémentaires, le pompage est homogène, non seulement sur toute la longueur du barreau, mais également (globalement) dans toute sa profondeur.

En effet, on sait que l'énergie de pompage est, généralement, fortement absorbée sur une courte distance de pénétration du barreau de sorte que la partie du barreau située à l'opposé de la zone de pénétration du faisceau de pompage dans ledit barreau, est le plus souvent faiblement pompée. Grâce au pompage précité selon les deux côtés, on remédie à cet inconvénient et on homogénéise le pompage pour tout le barreau (même si le centre du barreau est, malgré tout, un peu moins pompé que ses bords).

En outre, grâce à l'invention, les rayons de pompage traversent forcément le barreau, ce qui permet d'obtenir un rendement élevé.

De façon avantageuse :

- le système de pompage comporte au moins une barrette rectiligne de diodes laser ; et
- lesdits rayons de pompage sont engendrés parallèlement à l'axe longitudinal dudit barreau, par ledit système de pompage.

De plus, avantageusement, l'inclinaison de chaque face d'entrée dépend de la longueur L du barreau et de l'indice de réfraction $\underline{n}$ du milieu formant le bloc optique par rapport au milieu dans lequel sont engendrés les rayons de pompage. Plus précisément, de façon avantageuse, l'angle d'inclinaison θ entre la face d'entrée inclinée et l'axe longitudinal du barreau vérifie approximativement la relation approchée suivante :

$$\cos\theta = n.\cos(\theta + \text{arctg}(H/L))$$

dans laquelle :

- cosθ représente le cosinus de θ ;
- arctg(H/L) représente l'inverse de la tangente de H/L ; et
- H est la largeur du bloc optique, orthogonalement à l'axe longitudinal dudit barreau au niveau de la face d'entrée.

Par ailleurs, dans un mode de réalisation particulier, chaque bloc optique comporte, du côté opposé à sa face d'entrée, une seconde face inclinée, et les inclinaisons desdites secondes faces sont telles qu'elles engendrent un retour des rayons de pompage (vers les faces d'entrée) générant au moins un passage supplémentaire à travers le barreau. Ainsi, on augmente le nombre de passages à travers le barreau pour un même rayon de pompage, ce qui permet d'accroître l'efficacité du pompage.

En outre, de façon avantageuse, le barreau présente une section transversale rectangulaire, dont deux côtés adjacents définissent respectivement la largeur et la hauteur du barreau, ladite hauteur correspond à la hauteur de l'élément actif, la largeur de l'élément actif comprend ladite largeur du barreau, ainsi que les largeurs des blocs optiques, et la hauteur de l'élément actif est inférieure au double de la largeur du barreau. Grâce à cette hauteur réduite de l'élément actif (entre une face supérieure et une face inférieure) par rapport à sa largeur, on peut guider les rayons de pompage, en les faisant se réfléchir sur lesdites faces supérieure et inférieure, ce qui permet de définir un trajet de guidage court et ainsi un guidage rapide.

Par ailleurs, concernant l'indice de réfraction, avantageusement, l'indice de chaque bloc optique est inférieur à l'indice du barreau. Ainsi, on empêche que les rayons de pompage soient réfléchis par le barreau, au lieu de le traverser.

Les figures du dessin annexé feront bien comprendre comment l'invention peut être réalisée. Sur ces figures, des références identiques désignent des éléments semblables.

La figure 1 montre schématiquement une source laser conforme à l'invention.

La figure 2 montre, en perspective schématique, un élément actif conforme à l'invention.

Les figures 3 et 4 sont des schémas permettant d'expliciter le calcul des différentes dimensions d'un élément actif conforme à l'invention.

Les figures 5 et 6 sont deux vues schématiques, respectivement en plan et latérale, d'un élément actif conforme à l'invention.

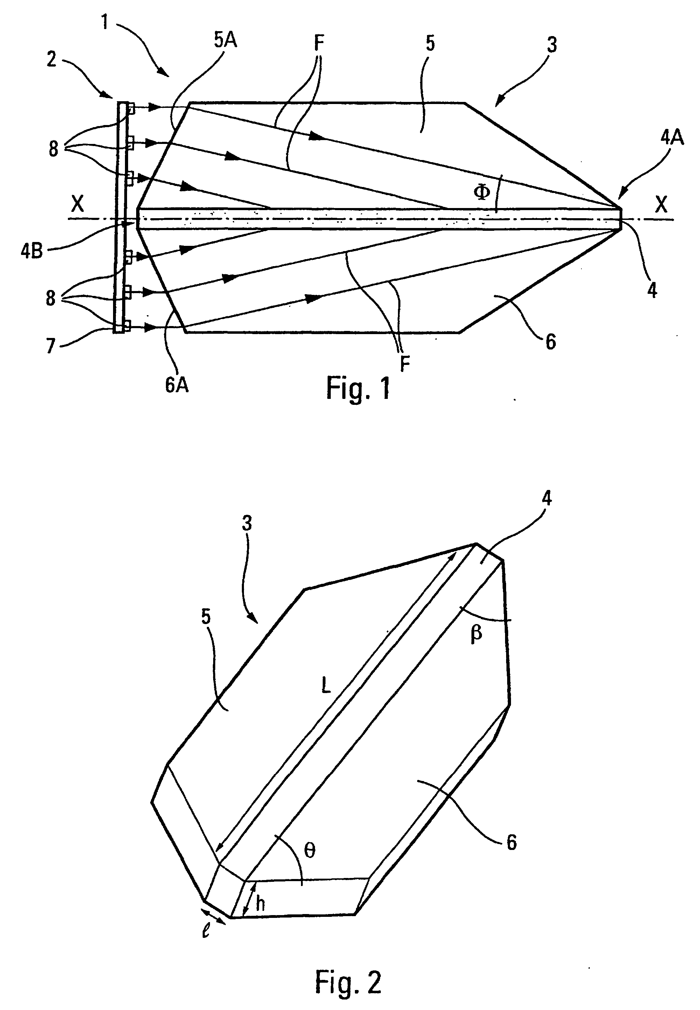

La source laser 1 conforme à l'invention et représentée schématiquement et partiellement sur la figure 1 comporte de façon connue :

- un système de pompage 2 précisé ci-dessous, pour engendrer au moins un faisceau de pompage formé de rayons de pompage F ;
- un élément actif 3 qui comprend :

  . un barreau allongé 4 d'axe X-X, de section transversale rectangulaire, qui est pourvu d'une matrice dopée usuelle (par exemple avec un dopage erbium-ytterbium) pour amplifier un rayonnement laser en recevant des rayons de pompage F ; et

deux blocs optiques 5, 6, par exemple en verre, en grenat d'aluminium et d'yttrium (YAG) ou en vanadate d'yttrium, qui sont fixés, en particulier par soudage, de part et d'autre dudit barreau 4, pour guider les rayons de pompage F vers ce dernier ; et

- une cavité optique connue et non représentée, qui confère au faisceau laser ses caractéristiques de directivité et de géométrie.

Selon l'invention :

- ledit système de pompage 2 est formé de manière à engendrer une pluralité de rayons de pompage F (d'au moins un faisceau de pompage) qui sont parallèles entre eux et (uniformément) répartis transversalement audit élément actif 3, en regard de la face d'entrée 5A, 6A de chacun des blocs optiques 5 et 6 ;
- la face d'entrée 5A et 6A de chacun desdits blocs optiques 5 et 6 est inclinée d'un angle θ par rapport à l'axe longitudinal X-X du barreau 4, angle θ qui est différent de 90° (figure 2) ;
- les rayons de pompage F sont engendrés de manière à ne pas être orthogonaux à la face d'entrée 5A, 6A correspondante de manière à être déviés par réfraction ; et
- l'inclinaison (angle θ) de chaque face d'entrée 5A, 6A est telle qu'elle dévie les rayons de pompage F qui la traversent de sorte que ces derniers atteignent ledit barreau 4 en étant répartis sur toute sa longueur L, comme représenté sur la figure 1.

Ainsi, grâce à l'invention :

- les rayons de pompage F sont uniformément répartis sur toute la longueur L du barreau 4 ; et
- le pompage est réalisé de façon identique des deux côtés du barreau 4, de sorte que le pompage est particulièrement homogène et le rendement est élevé.

De plus, les déviations des rayons de pompage F sur les faces d'entrée 5A, 6A sont réalisées par simple réfraction, sans moyens supplémentaires, en particulier sans moyens de réflexion. Une telle solution est simple, compacte et peu coûteuse.

Ledit système de pompage 2 comporte une barrette rectiligne 7 munie d'une pluralité de diodes laser 8, par exemple une barrette émettant 100 W durant 5 ms et présentant une zone émettrice de 10 mm x 1 µm pourvue de vingt-cinq diodes laser élémentaires.

Les diodes laser 8 sont réparties uniformément le long de la barrette 7 pour les parties de celle-ci qui sont en regard des faces d'entrées 5A et 6A, de manière à obtenir la répartition uniforme recherchée pour les rayons de pompage F émis.

De préférence, bien que non exclusivement, les rayons de pompage F qui sont parallèles entre eux, sont émis parallèlement à l'axe longitudinal X-X.

On notera que la présente invention peut, toutefois, également être mise en oeuvre si les rayons de pompage sont émis de façon (légèrement) inclinée par rapport à l'axe X-X. Il suffit alors de modifier l'angle θ de la face d'entrée 5A, 6A pour obtenir la répartition homogène précitée et conforme à l'invention du pompage.

La face d'entrée 5A, 6A est, de préférence, plane. Mais elle peut également être légèrement incurvée (l'angle d'inclinaison n'étant alors pas constant, mais légèrement variable).

Par conséquent, pour la mise en oeuvre de la présente invention, on peut utiliser des diodes laser 8 usuelles à coût réduit. Il n'est pas nécessaire, en particulier, d'utiliser des diodes fibrées coûteuses.

Selon l'invention, l'angle d'inclinaison θ de chaque face d'entrée 5A, 6A dépend de la longueur L du barreau 4 et de l'indice de réfraction n du milieu (verre par exemple) formant le bloc optique 5, 6 par rapport au milieu (air extérieur par exemple) dans lequel se trouvent les rayons de pompage F avant d'atteindre la face d'entrée 5A, 6A correspondante.

Plus précisément, selon l'invention, ledit angle d'inclinaison θ vérifie approximativement la relation approchée suivante :

$$\cos\theta = n.\cos(\theta + \operatorname{arctg}(H/L)) \qquad (1)$$

dans laquelle :

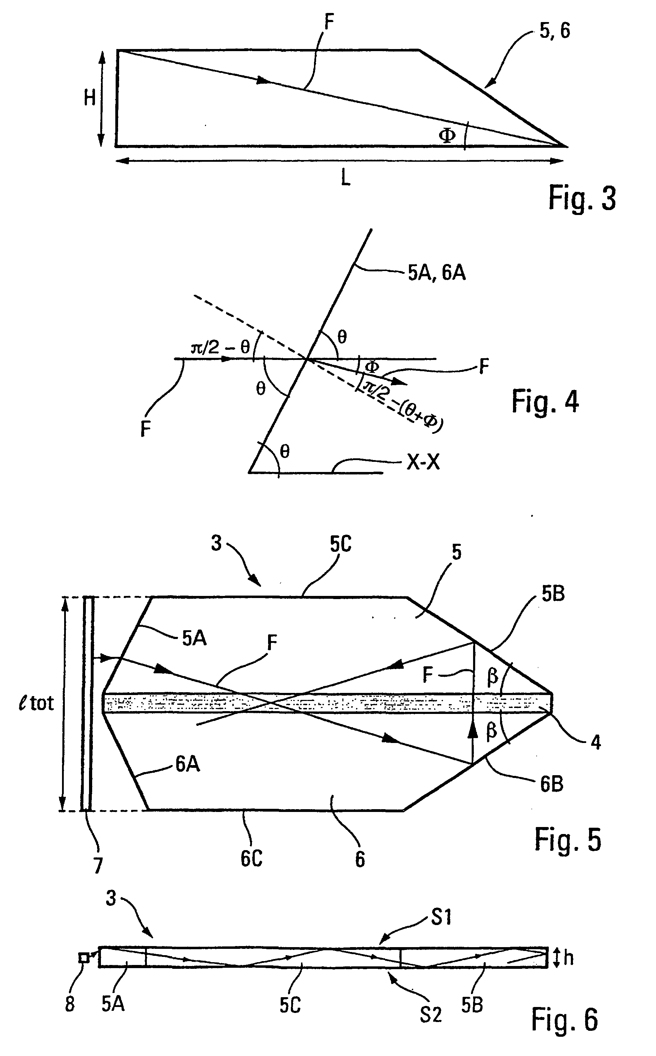

- $\cos\theta$ représente le cosinus de θ ;
- $\operatorname{arctg}(H/L)$ représente l'inverse de la tangente de H/L et
- H est la largeur d'un bloc optique 5, 6, orthogonalement à l'axe longitudinal X-X du barreau 4 au niveau de la face d'entrée 5A, 6A, tel que représenté sur la figure 3 (qui comprend une représentation schématique d'explication, sans face d'entrée inclinée).

Pour préciser la relation (1) précitée, on prend en compte l'angle Φ qui correspond à l'angle entre l'axe X-X et un rayon de pompage F dévié extrême, permettant de pomper le barreau 4 à l'extrémité 4A opposée à celle 4B en regard du système de pompage 2.

Cet angle Φ vérifie approximativement la relation (figure 3) :

$$\Phi = \operatorname{arctg}(H/L) \qquad (2)$$

De plus, la loi de réfraction au passage d'une face d'entrée 5A, 6A peut s'écrire (voir figure 4) :

$$\sin\left(\frac{\pi}{2} - \theta\right) = n.\sin\left(\frac{\pi}{2} - (\Theta + \theta)\right)$$

c'est-à-dire :

$$\cos\theta = n.\cos(\theta + \Phi) \qquad (3)$$

A partir desdites relations (2) et (3), on obtient la relation (1) précitée.

Concernant les dimensions effectives de l'élément actif 3 pour un exemple particulier de source laser 1, il convient de tenir compte notamment du rendement souhaité, des caractéristiques énergétiques du ou des faisceaux de pompage et des caractéristiques de pompage du barreau 4

On notera que la longueur L du barreau 4 peut être obtenue à partir de l'expression suivante :

$$L = \frac{\ln(\sqrt{G})}{go}$$

dans laquelle :

- ln correspond au logarithme ;
- G représente le gain pour un aller-retour ; et
- go représente le gain faible signal.

A titre d'exemple, avec les valeurs suivantes qui permettent d'obtenir une densité de dépôt d'environ 12 J.cm$^{-3}$ en moyenne :

$$\begin{cases} G = 1,8 \\ go = 0,11 \text{cm}^{-1} \end{cases} ,$$

la longueur L prend la valeur :
L = 25 mm.

La largeur H, quant à elle, est définie en fonction de la longueur $\ell$tot de la barrette 7 de diodes laser 8, c'est-à-dire approximativement :

$$\ell\text{tot} = 2H + \ell,$$

$\ell$ étant la largeur du barreau 4.

On obtient donc la valeur de la largeur H à partir de l'expression :

$$H = (\ell\text{tot} - \ell)/2.$$

On notera qu'en pratique, la largeur de l'élément actif est plus importante que $\ell$tot, pour tenir compte de la divergence de la barrette et des tolérances de positionnement. La largeur totale de l'élément actif devient alors larg = 2H + $\ell$ + 2$\varepsilon$, $\varepsilon$ étant la somme du demi-élargissement du faisceau sur la face d'entrée et de la demi-tolérance de positionnement relative de l'élément actif et de la diode.

L'angle $\theta$, quant à lui, est obtenu à partir de la relation (1) précitée, en prenant en compte les valeurs des paramètres H et L, ainsi déterminées.

Concernant la largeur $\ell$ du barreau 4, on prend en compte une loi connue de transmission au travers d'un milieu absorbant qui s'écrit :

$$2e^{\frac{-\alpha\ell}{2\sin\theta}} = X$$

avec $\alpha$ le coefficient d'absorption du milieu et X le pourcentage d'énergie de pompage escompté au centre du barreau 4 par rapport à l'énergie arrivant à la surface.

Cette loi permet de déterminer la largeur $\ell$.

De plus, la hauteur $\underline{h}$ est définie à partir de cette largeur $\ell$, de la longueur L et du volume $\underline{v}$ (v = $\ell$xhxL) du barreau 4 (figure 2), qui est nécessaire pour obtenir le dépôt moyen d'énergie souhaité, en fonction de l'énergie du ou des faisceaux de pompage.

Ainsi, par exemple pour obtenir un dépôt moyen de 12 J.cm$^{-3}$, avec une diode laser 8 émettant 0,5 J par impulsion à pleine puissance, dont environ 0,45 J d'énergie utile, le volume $\underline{v}$ du barreau 4 doit être d'environ :

$$v = 0,45/12 = 0,0375 \text{ cm}^3 = 37,5 \text{ mm}^3.$$

On notera que, dans un mode de réalisation préféré, l'élément actif 3 présente les dimensions suivantes :

L = 25,7 mm
$\Phi$ = 12,5°
$\theta$ = 57,3°
$\ell$ = 1,1 mm
h = 1,3 mm.

Comme le barreau 4 est situé dans toute la hauteur $\underline{h}$ de l'élément actif 3 (figure 2), les rayons de pompage F traversent forcément ledit barreau 4 (et ne réalisent pas, comme dans certains types d'élément actif connus, une pluralité de réflexions sur les faces de l'élément actif, qui entraînent des pertes, avant de traverser éventuellement le barreau), ce qui permet d'obtenir un rendement élevé.

Par ailleurs, selon l'invention, les blocs optiques 5 et 6 sont symétriques par rapport à l'axe X-X et chacun desdits blocs optiques 5, 6 comporte, du côté opposé à sa face d'entrée 5A, 6A, une seconde face 5B, 6B qui est inclinée par rapport à l'axe X-X. Les inclinaisons β desdites secondes faces 5B, 68 sont choisies, de manière usuelle, de sorte qu'elles engendrent un retour des rayons de pompage vers les faces d'entrée 5A, 6A, comme représenté pour un seul rayon F sur la figure 5. Dans l'exemple préféré précité, l'angle β est sensiblement égal à 38,75°.

Ceci permet d'augmenter le nombre de passages des rayons de pompage F à travers le barreau 4 et ainsi d'accroître l'efficacité du pompage et donc l'efficacité de la source laser 1.

Les faces inclinées 5A et 5B, 6A et 6B d'un bloc optique 5, 6 sont liées à une face 5C, 6C qui est parallèle à l'axe X-X.

De plus, selon l'invention, la hauteur h (qui correspond, comme on peut le voir sur la figure 2, à la fois à la hauteur du barreau 4 et à celle des blocs optiques 5 et 6) est inférieure au double de la largeur $\ell$ et, de préférence, est proche de ladite largeur $\ell$, comme illustré précédemment avec l'exemple chiffré. Par conséquent, la hauteur h de l'élément actif 3 est bien inférieure à sa largeur (totale) $\ell_{tot}$. Aussi, pour réduire la longueur du trajet d'un rayon de pompage F, on le guide, selon l'invention, suivant l'axe rapide tout au long de sa propagation, c'est-à-dire avec des réflexions sur les faces supérieure S1 et inférieure S2 de l'élément actif 3, comme représenté sur la figure 6 qui correspond à une vue de dessus de la figure 5.

Par ailleurs, on notera que :

- les matériaux des blocs optiques 5 et 6 et du barreau 4 doivent préférentiellement présenter des coefficients de dilatation suffisamment proches pour permettre la réalisation d'une soudure efficace entre ces matériaux ; et
- concernant les indices de ces matériaux, pour éviter une réflexion d'un rayon de pompage F sur le barreau 4, il est préférable d'utiliser un matériau d'indice plus faible pour les blocs optiques 5 et 6. Toutefois, comme les rayons de pompage F sont toujours relativement écartés du barreau, l'indice des blocs optiques 5 et 6 peut être supérieur de 0,01 sans pour autant gêner les rayons de pompage F inclinés de plus de 7°.

Par conséquent, la présente invention présente notamment les avantages suivants :

- une bonne homogénéité longitudinale et en profondeur du pompage (entre 8,5 et 13 J/cm$^3$ pour l'exemple précité) ;
- un pompage direct, sans diode fibrée, même pour un barreau 4 de diamètre réduit ;
- un pompage au moyen d'une barrette simple 7, sans moyens optiques de collimation, tout en réalisant le pompage d'un volume actif (barreau 4) qui est étendu en longueur (25 mm par exemple) et réduit en diamètre ( 1 mm par exemple) ; et
- un rendement élevé (environ 90%) et une bonne homogénéité, quels que soient la température d'utilisation et le matériau (verre) utilisé.

**Revendications**

1. Source laser comportant au moins :

   - un système de pompage (2) pour engendrer au moins un faisceau de pompage ; et
   - un élément actif (3) qui comprend un barreau allongé (4) pourvu d'une matrice dopée susceptible d'absorber des rayons de pompage (F) dudit faisceau de pompage pour amplifier un rayonnement laser et au moins un bloc optique (5, 6) agencé d'un côté dudit barreau (4) pour guider les rayons de pompage (F) vers ledit barreau (4),

   ledit système de pompage (2) étant formé de manière à engendrer une pluralité de rayons de pompage (F) qui sont parallèles entre eux et uniformément répartis transversalement audit élément actif (3), en regard au moins d'une face d'entrée (5A, 6A) dudit bloc optique (5, 6),
   cette source laser étant **caractérisée en ce que** ladite face d'entrée (5A, 6A) du bloc optique (5, 6) est, au moins partiellement, inclinée par rapport à l'axe longitudinal (X-X) dudit barreau (4) et est, au moins partiellement, non orthogonale aux rayons de pompage (F) engendrés par le système de pompage (2) pour dévier par réfraction lesdits rayons de pompage (F) de manière à les transmettre vers ledit barreau (4), et **en ce que** l'inclinaison (θ) de ladite face d'entrée (5A, 6A) est telle qu'elle dévie les rayons de pompage (F) de sorte que ces derniers atteignent ledit barreau (4) en étant répartis sur toute sa longueur (L).

2. Source laser selon la revendication 1, **caractérisée en ce que** ledit élément actif (3) comporte deux blocs optiques (5, 6) agencés de part et d'autre dudit barreau (4) et munis, chacun, d'une face d'entrée inclinée (5A, 6A).

3. Source laser selon l'une des revendications 1 et 2, **caractérisée en ce que** ledit système de pompage (2) comporte au moins une barrette rectiligne (7) de diodes laser (8).

4. Source laser selon l'une quelconque des revendications 1 à 3, **caractérisée en ce que** lesdits rayons de pompage (F) sont engendrés parallèlement à l'axe longitudinal (X-X) dudit barreau (4).

5. Source laser selon l'une quelconque des revendications précédentes, **caractérisée en ce que** l'inclinaison (θ) de chaque face d'entrée (5A, 6A) dépend de la longueur L du barreau (4) et de l'indice de réfraction $\underline{n}$ du milieu formant le bloc optique (5, 6) par rapport au milieu dans lequel sont engendrés les rayons de pompage (F).

6. Source laser selon la revendication 5, **caractérisée en ce que** l'angle d'inclinaison θ entre la face d'entrée inclinée (5A, 6A) et l'axe longitudinal (X-X) du barreau (4) vérifie sensiblement la relation suivante :

$$\cos\theta = n.\cos(\theta + arctg(H/L))$$

dans laquelle :

- cosθ représente le cosinus de θ ;
- arctg(H/L) représente l'inverse de la tangente de H/L ; et
- H est la largeur du bloc optique (5, 6) orthogonalement à l'axe longitudinal (X-X) dudit barreau (4) au niveau de la face d'entrée (5A, 6A).

7. Source laser selon la revendication 2, **caractérisée en ce que** chaque bloc optique (5, 6) comporte, du côté opposé à sa face d'entrée (5A, 6A), une seconde face inclinée (5B, 6B), et **en ce que** les inclinaisons (β) desdites secondes faces (5B, 6B) sont telles qu'elles engendrent un retour des rayons de pompage (F) générant au moins un passage supplémentaire à travers ledit barreau (4).

8. Source laser selon la revendication 2, **caractérisée en ce que** le barreau (4) présente une section transversale rectangulaire, dont deux côtés adjacents définissent respectivement la largeur (ℓ) et la hauteur (h) du barreau (4), **en ce que** ladite hauteur (h) correspond à la hauteur de l'élément actif (3), **en ce que** la largeur (ℓtot) de l'élément actif (3) comprend ladite largeur (ℓ) du barreau (4), ainsi que les largeurs (H) des blocs optiques (5, 6) et **en ce que** la hauteur (h) de l'élément actif (3) est inférieure au double de la largeur (ℓ) du barreau (4).

9. Source laser selon l'une quelconque des revendications précédentes, **caractérisée en ce que** l'indice du bloc optique (5, 6) est inférieur à l'indice du barreau (4).

**Patentansprüche**

1. Laserquelle, umfassend mindestens:

- ein Pumpsystem (2) zur Erzeugung von mindestens einem Pumpbündel; und
- ein aktives Element (3), das umfasst: einen länglichen Stab (4), der mit einer herkömmlichen dotierten Matrix versehen ist, die in der Lage ist, Pumpstrahlen (F) des Pumpbündels zu absorbieren, um eine Laserstrahlung zu verstärken, und mindestens einen optischen Block (5, 6), der an einer Seite des Stabs (4) angeordnet ist, um die Pumpstrahlen (F) zum Stab (4) zu leiten,

wobei dieses Pumpsystem (2) derart geformt ist, dass es gegenüber von mindestens einer Eintrittsfläche. (5A, 6A) des optischen Blocks (5, 6) eine Vielzahl von Pumpstrahlen (F) erzeugt, die zueinander parallel und gleichförmig quer zum aktiven Element (3) verteilt sind,
wobei diese Laserquelle **dadurch gekennzeichnet ist, dass** die Eintrittsfläche (5A, 6A) des optischen Blocks (5, 6) mindestens teilweise in Bezug auf die Längsachse (X-X) des Stabs (4) geneigt ist und mindestens teilweise nicht rechtwinklig zu den Pumpstrahlen (F) ist, die vom Pumpsystem (2) erzeugt werden, um die Pumpstrahlen (F) durch Brechung derart abzulenken, dass sie zum Stab (4) übertragen werden, und dass die Neigung (θ) der Eintrittsfläche (5A, 6A) derart ist, dass sie die Pumpstrahlen (F) derart ablenkt, dass die Letztgenannten den Stab (4) so erreichen, dass sie über seine gesamte Länge (L) verteilt werden.

2. Laserquelle nach Anspruch 1, **dadurch gekennzeichnet, dass** das aktive Element (3) zwei optische Blöcke (5, 6) umfasst, die zu beiden Seiten des Stabs (4) angeordnet sind und jeweils mit einer geneigten Eintrittsfläche (5A, 6A) versehen sind.

3. Laserquelle nach einem der Ansprüche 1 und 2, **dadurch gekennzeichnet, dass** das Pumpsystem (2) mindestens einen geraden Steg (7) mit Laserdioden (8) umfasst.

4. Laserquelle nach einem der Ansprüche 1 bis 3, **dadurch gekennzeichnet, dass** die Pumpstrahlen (F) parallel zur Längsachse (X-X) des Stabs (4) erzeugt werden.

5. Laserquelle nach einem der vorhergehenden Ansprüche, **dadurch gekennzeichnet, dass** die Neigung (θ) jeder Eintrittsfläche (5A, 6A) von der Länge L des Stabs (4) und vom Brechungsindex $\underline{n}$ des den optischen Block (5, 6) bildenden Mediums in Bezug auf das Medium abhängt, in dem die Pumpstrahlen (F) erzeugt werden.

6. Laserquelle nach Anspruch 5, **dadurch gekennzeichnet, dass** der Neigungswinkel θ zwischen der geneigten Eintrittsfläche (5A, 6A) und der Längsachse (X-X) des Stabs. (4) im Wesentlichen die folgende Beziehung verifiziert:

$$\cos\theta = n.\cos(\theta+\text{arctg}(H/L))$$

wobei:

- $\cos\theta$ den Cosinus von $\theta$ darstellt;
- arctg(H/L) den Kehrwert der Tangente von H/L darstellt; und
- H die Breite des optischen Blocks (5, 6) senkrecht zur Längsachse (X-X) des Stabs (4) auf Höhe der Eintrittsfläche (5A, 6A) ist.

7. Laserquelle nach Anspruch 2, **dadurch gekennzeichnet, dass** jeder optische. Block (5, 6) an der seiner Eintrittsfläche (5A, 6A) entgegengesetzten Seite eine zweite geneigte Seite (5B, 6B) umfasst, und dass die Neigungen ($\beta$) der zweiten Seiten (5B, 6B) derart sind, dass sie eine Rückkehr der Pumpstrahlen (F) hervorrufen, was zu mindestens einem zusätzlichen Durchgang durch den Stab (4) führt.

8. Laserquelle nach Anspruch 2, **dadurch gekennzeichnet, dass** der Stab (4) einen rechteckigen Querschnitt aufweist, wobei zwei aneinandergrenzende Seiten die Breite ($\ell$) bzw. die Höhe (h) des Stabs (4) definieren, dass die Höhe (h) der Höhe des aktiven Elements (3) entspricht, dass die Breite ($\ell$tot) des aktiven Elements (3) die Breite ($\ell$) des Stabs (4) sowie die Breiten (H) der optischen Blökke (5, 6) umfasst und dass die Höhe (h) des aktiven Elements (3) kleiner als das Doppelte der Breite ($\ell$) des Stabs (4) ist.

9. Laserquelle nach einem der vorhergehenden Ansprüche, **dadurch gekennzeichnet, dass** der Index des optischen Blocks (5, 6) kleiner als der Index des Stabs (4) ist.

## Claims

1. Laser source comprising at least:

   - a pumping system (2) for generating at least one pump beam; and
   - an active element (3) which comprises an elongate rod (4) provided with a doped matrix capable of absorbing pump rays (F) of the said pump beam in order to amplify a laser radiation and at least one optical block (5, 6) placed on one side of the said rod (4) in order to guide the pump rays (F) towards the said rod (4),

   the said pumping system (2) being formed so as to generate a plurality of pump rays (F) which are mutually parallel and uniformly distributed transversely to the said active element (3), facing at least one entry face (5A, 6A) of the said optical block (5, 6),

   this laser source being **characterized in that** the said entry face (5A, 6A) of the optical block (5, 6) is, at least partly, inclined with respect to the longitudinal axis (X-X) of the said rod (4) and is, at least partly, non-orthogonal to the pump rays (F) generated by the pumping system (2) in order to deflect, by refraction, the said pump rays (F) so as to transmit them towards the said rod (4) and **in that** the inclination ($\theta$) of the said entry face (5A, 6A) is such that it deflects the pump rays (F) in such a way that these rays reach the said rod (4) so that they are distributed over its entire length (L).

2. Laser source according to Claim 1, **characterized in that** the said active element (3) comprises two optical blocks (5, 6) which are placed on each side of the said rod (4) and are each provided with an inclined entry face (5A, 6A).

3. Laser source according to either of Claims 1 and 2, **characterized in that** the said pumping system (2) comprises at least one linear array (7) of laser diodes (8).

4. Laser source according to any one of Claims 1 to 3, **characterized in that** the said pump rays (F) are generated parallel to the longitudinal axis (X-X) of the said rod (4).

5. Laser source according to any one of the preceding claims, **characterized in that** the inclination ($\theta$) of each entry face (5A, 6A) depends on the length L of the rod (4) and on the refractive index n of the medium forming the optical block (5, 6) with respect to the medium in which the pump rays (F) are generated.

6. Laser source according to Claim 5, **characterized in that** the angle of inclination 8 between the inclined entry face (5A, 6A) and the longitudinal axis (X-X) of the rod (4) approximately satisfies the following equation:

   $$\cos\theta = n.\cos(\theta+\arctan(H/L))$$

   in which:

   - $\cos\theta$ represent the cosine of $\theta$;
   - arctan (H/L) represents the inverse tangent of H/L; and
   - H is the width of the optical block (5, 6) orthogonal to the longitudinal axis (X-X) of the said rod (4) at the entry face (5A, 6A).

7. Laser source according to Claim 2, **characterized in that** each optical block (5, 6) has, on the opposite side from its entry face (5A, 6A), a second inclined face (5B, 6B) and **in that** the inclinations (β) of the said second faces (5B, 6B) are such that they cause the pump rays (F) to return, generating at least one additional pass through the said rod (4).

8. Laser source according to Claim 2, **characterized in that** the rod (4) has a rectangular cross section, the two adjacent sides of which define the width (ℓ) and the height (h) of the rod (4) respectively, **in that** the said height (h) corresponds to the height of the active element (3), **in that** the width (ℓ tot) of the active element (3) comprises the said width (ℓ) of the said rod (4) and the widths (H) of the optical blocks (5, 6) and **in that** the height (h) of the active element (3) is less than twice the width (ℓ) of the rod (4).

9. Laser source according to any one of the preceding claims, **characterized in that** the index of the optical block (5, 6) is less than the index of the rod (4).

Fig. 1

Fig. 2

Fig. 3

Fig. 4

Fig. 5

Fig. 6